# EUROPEAN PATENT APPLICATION

(11) **EP 1 659 208 A2**
(43) Date of publication of application: **24.05.2006**
(21) Application number: 05110671.4
(22) Date of filing: 11.11.2005
(51) Int. Cl.: D06F 58/24, D06F 25/00

(54) **Washing/drying machine**

(30) Priority: 17.11.2004 KR 2004093877
(71) Applicant: Samsung Electronics Co., Ltd., Suwon-si, Gyeonggi-Do (KR)
(72) Inventor: CHO, Hwang-mook, Yeongtong-gu , Gyeonggi-do (KR); YANG, Byoung-yull, Ansan-si, Gyeonggi-do (KR); PARK, Jae-ryong, Paldal-gu, Gyeonggi-do (KR); KIM, Hyung-gyoon, Suwon-si , Gyeonggi-do (KR); PYO, Sang-yeon, Suwon-si , Gyeonggi-do (KR)
(74) Representative: Grey, Ian Michael

(57) **Abstract**

A washing machine includes a drum (20) and a condensing duct (30) connected with the drum (20). The condensing duct (30) includes an air inlet (32), an air outlet (36) and a condensing unit (34). A condensation water spray member (40) is disposed in the condensing duct (30) and a condensation water dispersing plate (90) is supported by a lower portion of an inside wall in the condensing unit (34) has a hole therethrough to allow air from the air inlet (32) to pass through the dispersing plate (90).

## Description

The present invention relates to a washing and/or drying machine comprising a drum, a condensation duct in communication with the drum for the circulation of air therethrough and condensing means within the condensation duct to condense air therein.

Drum-type washing machines are known which can perform a washing operation and also rinsing, dewatering/spinning and drying operations.

During a drying operation of a known drum washing machine, air is heated by a heater and is supplied to a drum to heat the laundry therein. As a result, moisture in the laundry is evaporated and the hot moisture-laden air is condensed to enhance drying efficiency of the drying operation.

One such known conventional drum washing machine is disclosed in Korean Patent Application No. 10-2002-0054390 and comprises a drum, a condensing duct connected with the drum and a condensation water spray member disposed in the condensing duct. An ascent limitation projection is provided in an upper portion of the condensing duct which limits the ascent of condensation water that flows backward in the condensing duct and a condensation water stay projection is provided in the condensing duct which allows the condensation water falling down from the ascent limitation projection to be dispersed.

However, such a known drum washing machine has the condensation water stay projection disposed in partly one first side of the condensing duct and also disperses limited condensation water flowing down from the ascent limitation projection. This has relatively little dispersing effect of the condensation water meaning the conventional drum washing machine has a limited condensing efficiency of the air passing through the condensing duct.

It is therefore an object of the present invention to provide a washing and/or drying machine which substantially alleviates or overcomes the problems mentioned above.

A washing and/or drying machine according to the present invention is characterised by a condensation plate disposed in the condensation duct to disperse condensed water that collects on the condensation plate, the condensation plate having a hole therein to enable air to flow through the duct.

In a preferred embodiment, the condensation plate extends across the entire cross-section of the condensation duct and includes and preferably the hole is formed in the centre of the condensation plate.

The condensation duct may have an inlet and an outlet and preferably the area of the hole in the condensation plate is larger than the area of the inlet.

Conveniently, the condensation plate lies in a plane perpendicular to the direction of flow of air though the condensation duct.

The present invention also provides a washing machine comprising a drum, a condensing duct connected with the drum, and comprising an air inlet, an air outlet and a condensing unit, a condensation water spray member disposed in the condensing duct and a condensation water dispersing plate supported by a lower portion of an air-passing hole connected with the air inlet in a centre portion thereof.

According to an aspect of the present invention, the air-passing hole is larger than the air inlet.

According to an aspect of the present invention, the condensation water dispersing plate is perpendicular to a flowing direction of internal cycling air passing through the condensing duct.

The present invention further provides a drying machine comprising a drum, a condensing duct connected with the drum, and comprising air inlet, an air outlet and a condensing unit, a condensation water spray member disposed in the condensing duct and a condensation water dispersing plate is supported by a lower portion of an inside wall in the condensing unit, and formed with an air-passing hole connected with the air inlet in a centre portion thereof.

A preferred embodiment of the present invention will now be described, by way of example only, with reference to the accompanying drawings, in which:
Figure 1 is a perspective view of a drum washing machine according to the present invention;
Figure 2 is a sectional view of the drum washing machine according to the present invention;
Figure 3 is a perspective view showing a condensing duct of the drum washing machine according to a first embodiment of the present invention;
Figure 4 is a perspective view showing a condensation water dispersing plate disposed in the condensing duct of the drum washing machine according to the first embodiment of the present invention;
Figure 5 is a partial sectional view showing an installation state of the condensation water dispersing plate in the condensing duct of the drum washing machine according to the first embodiment of the present invention; and
Figure 6 is a perspective view showing the condensing duct of the drum washing machine according to a second embodiment of the present invention.

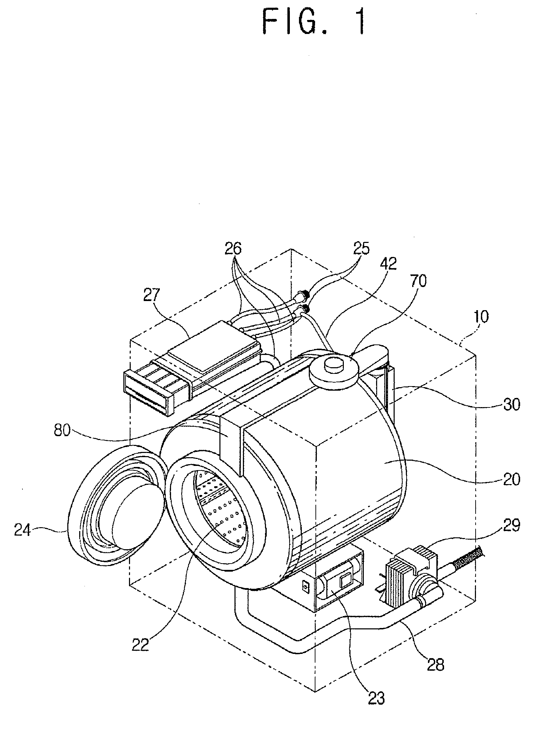

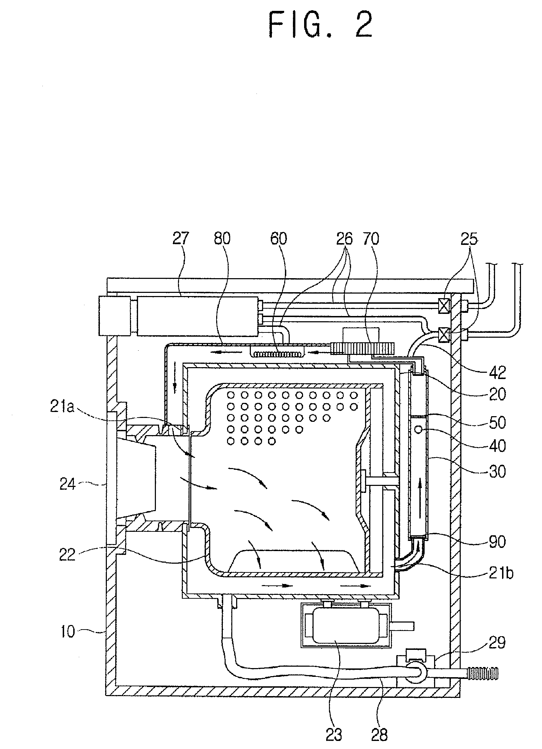

Figures 1 and 2 of the drawings show a drum washing machine according to the present invention comprising a main body 10, a cylindrical drum 20 provided in the main body 10 and a cylindrical washing chamber 22 rotatably mounted in the drum 20 for containing laundry to be washed therein, and having dewatering/drainage holes through its outer wall. A driving motor 23 is provided in a lower portion of the drum 20 to rotate the washing chamber 22 clockwise or anti-clockwise during washing, rinsing and dewatering/draining/spinning phases. A door 24 is provided to open and close an opening in the front portion of the main body 10.

A water supply unit is provided and comprises a supply valve 25, a water supply 26 and a laundry detergent unit 27 to fill the drum with water and to dissolve a laundry detergent in the supplied water.

A drying unit is provided in the upper portion of the drum 20 to dry the clothes after the dewatering/draining/spinning phase is completed. The drying unit comprises a fan 70 disposed above the drum 20, a discharge duct 80 connecting the fan 70 and an air inlet 21a of the drum, a heater 60 provided inside the discharge duct 80, and a condensing duct 30 communicating an air outlet 21b of the drum 20 and the fan 70. A condensation water spray member 40 is provided in the condensing duct 30 to spray condensation water therein and a condensation water supply pipe 42 is connected to the condensation water spray member 40 to supply the condensation water thereto. With this configuration, air supplied by the fan 70 passes through the discharging duct 80 and is heated by the heater 60. The heated air is supplied to inside of the drum 20 through the air inlet 21a to heat and dry the clothes therein.

During the drying phase, hot moisture-laden air is generated and passes into the condensing duct 30 through the air outlet 21b towards the fan 70. Moisture contained in the hot moisture-laden air is condensed by the condensation water sprayed from the condensation water spray member 40 from an upper portion to a lower portion of the condensing duct 30

A drain unit is provided in the lower portion of the drum 20 and comprises a drain pipe 28 and a drain pump 29 to drain washing water from the drum 20 to an outside drain.

A back flowing guide 50 is provided in the condensing duct 30 to prevent the condensation water, which is dispersed by internal cycling air passing through the condensing duct 30, from flowing back into the drum 20. This back flowing of the condensation water happens due to dispersion of the condensation water caused by increasing the velocity of the internally cycling air which is done to enhance the efficiency of the drying process.

A condensation water dispersing plate 90 is provided in a lower portion of the condensing duct 30 to increase dispersion of the condensation water which is sprayed from the condensation water spray member 40.

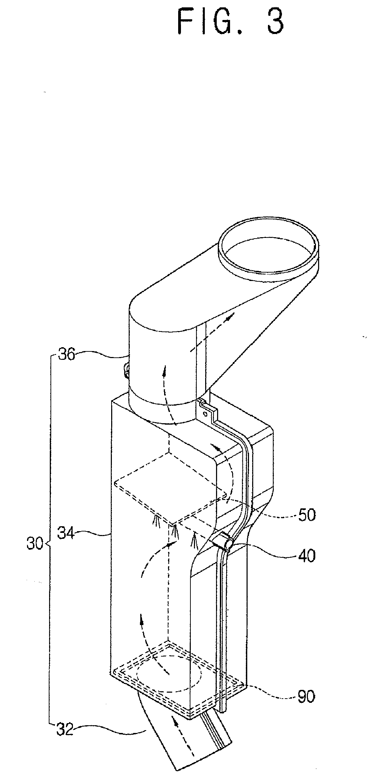

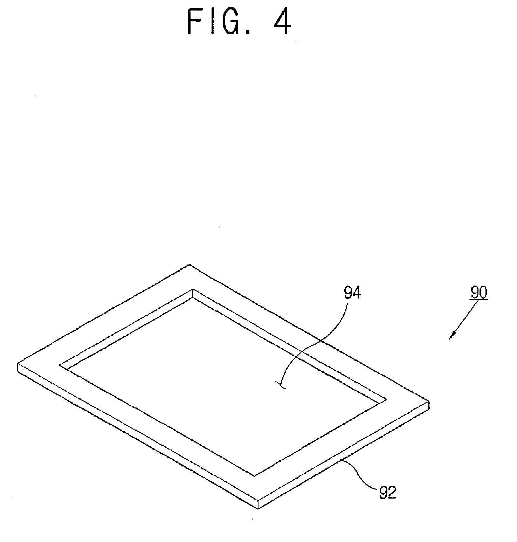

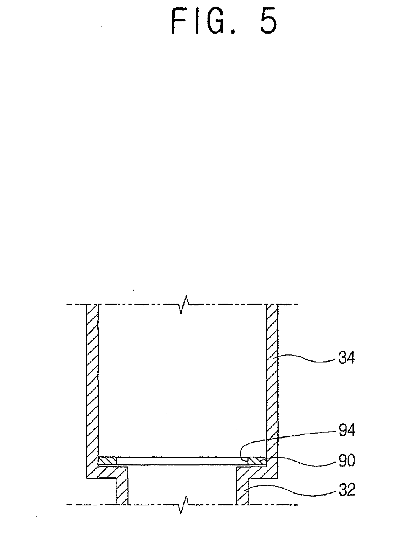

As shown in Figures 3 to 5, the condensing duct 30 according to the present invention comprises an air inlet 32 through which air from inside the drum 20 is introduced, a condensing unit 34 through which the air passes and an air outlet 36 discharging the air which has passed through the condensing unit 34.

The condensation water dispersing plate 90 is disposed around an internal wall of a lower portion in the condensing unit 34 and an outer peripheral surface 92 of the dispersing plate 90 is configured and positioned to maintain an airtight seal with the internal wall of the condensing unit 34 to keep the condensation water sprayed from the condensation water spray member 40 on an upper surface of the condensation water dispersing plate 90.

An air passing hole 94 is provided in a centre portion of the dispersing plate 90 in communication with the air inlet 32 of the condensing duct 30. The internally cycling air introduced from the air inlet 32 disperses the condensation water from the dispersing plate 90 as it passes through the air passing hole 94. The condensation water back flowing guide 50 limits ascent of the dispersed condensation water to prevent it from flowing to the air outlet 36.

When the width of the air inlet 32 is smaller than that of the condensing unit 34, a flow speed of the internal cycling air is relatively fast. Thus, the efficiency of dispersing the condensation water is further increased. The configuration of the outer peripheral surface 92 of the condensation water dispersing plate 90 can be varied depending on the condensing duct 30, and a shape of the air passing hole 94 may also be varied so long as it enhances dispersing efficiency of the condensation water.

A size of the air passing hole 94 in the condensation water dispersing plate 90 is larger than the air inlet 32 of the condensing duct 30. Also, the condensation water dispersing plate 90 is preferably perpendicular to a flowing direction of the inner cycling air.

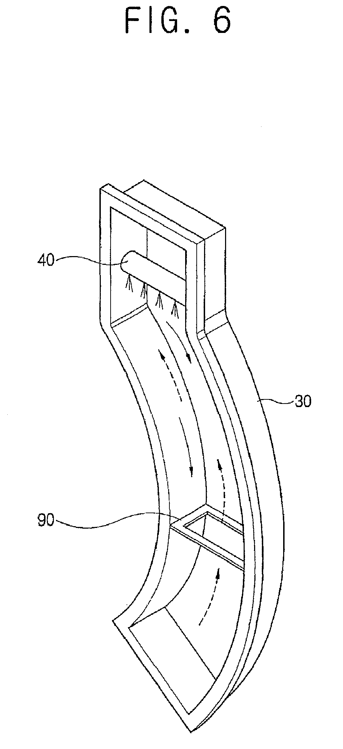

The condensation water dispersing plate 90 may be disposed in a condensing duct 30 having a structure as shown in Figure 6 to disperse the condensation water sprayed from the condensation water spray member 40, thereby enhancing the condensing efficiency. The structure of the condensing duct 30 may be varied within the scope of the present invention.

The present invention includes a drum washing machine having a drying unit and also a dryer or other similar machine to dry clothes. In this case, a drum in the drying machine would perform the same function as described above with reference to the drum of the washing machine and other elements are applied similarly.

Although a few exemplary embodiments of the present invention have been shown and described, it will be appreciated by those of ordinary skill in the art that changes may be made in these embodiments without departing from the principles of the invention, the scope of which is defined in the appended claims and their equivalents.

## Claims

1. A washing and/or drying machine comprising a drum, a condensation duct in communication with the drum for the circulation of air therethrough and condensing means within the condensation duct to condense air therein, **characterised by** a condensation plate disposed in the condensation duct to disperse condensed water that collects on the condensation plate, the condensation plate having a hole therein to enable air to flow through the duct.

2. A washing and/or drying machine according to claim 1 wherein the hole is formed in the centre of the condensation plate.

3. A washing and/or drying machine according to claim 1 or claim 2 wherein the condensation duct has an inlet and an outlet, and the area of the hole in the condensation plate is larger than the area of the inlet.

4. A washing and/or drying machine according to any preceding claim wherein the condensation plate lies in a plane perpendicular to the direction of flow of air though the condensation duct.

5. A washing machine comprising a drum, a condensing duct connected with the drum, and comprising an air inlet, an air outlet and a condensing unit, a condensation water spray member disposed in the condensing duct and a condensation water dispersing plate supported by a lower portion of an inside wall in the condensing unit, and formed with an air-passing hole connected with the air inlet in a centre portion thereof.

6. The washing machine according to claim 5 wherein the air-passing hole is larger than the air inlet.

7. The washing machine according to claim 6 wherein the condensation water dispersing plate is perpendicular to a flowing direction of internal cycling air passing through the condensing duct.

8. A drying machine comprising a drum, a condensing duct connected with the drum, and comprising an air inlet, an air outlet and a condensing unit, a condensation water spray member disposed in the condensing duct and a condensation water dispersing plate supported by a lower portion of an inside wall in the condensing unit, and formed with an air-passing hole connected with the air inlet in a centre portion thereof.
